# EUROPEAN PATENT APPLICATION

(11) **EP 4 485 091 A1**
(43) Date of publication of application: **01.01.2025**
(21) Application number: 23815136.9
(22) Date of filing: 29.05.2023
(51) Int. Cl.: G04G 17/08, G04B 37/22

(54) **CARBON FIBER WATCHCASE AND PREPARATION METHOD THEREFOR, AND SMART WATCH**

(30) Priority: 30.05.2022 CN 202210599140
(71) Applicant: Huawei Technologies Co., Ltd., Shenzhen, Guangdong 518129 (CN)
(72) Inventor: ZHANG, Bin, Shenzhen, Guangdong 518129 (CN); FAN, Mao, Shenzhen, Guangdong 518129 (CN); YANG, Junjie, Shenzhen, Guangdong 518129 (CN); FU, Kang, Shenzhen, Guangdong 518129 (CN); ZHANG, Pan, Shenzhen, Guangdong 518129 (CN)
(74) Representative: Körber, Martin Hans
(86) International application number: PCT/CN2023/096804
(87) International publication number: WO 2023/231955

(57) **Abstract**

This application relates to a carbon fiber watch case, a method for preparing a carbon fiber watch case, and a smartwatch. The carbon fiber watch case includes a main body structure and a conductive structure. The main body structure has an inner surface and an outer surface. The conductive structure has a first contact on the inner surface and a second contact on the outer surface to electrically connect the inner surface and the outer surface of the carbon fiber watch case. The main body structure includes a braided body and a polymer body. The braided body includes a carbon fiber, and the braided body has a network-like structure. The polymer body at least fills a gap of the network-like structure of the braided body so that the braided body and the conductive structure form an integrated structure. The conductive structure may implement a conduction function between the inner surface and the outer surface of the main body structure. When the carbon fiber watch case is used in an electronic device, electromagnetic shielding of the carbon fiber is prevented from affecting electromagnetic signal transmission of an electronic product.

## Description

### CROSS-REFERENCE TO RELATED APPLICATION

This application claims priority to Chinese Patent Application No. 202210599140.X, filed with the China National Intellectual Property Administration on May 30, 2022 and entitled "CARBON FIBER WATCH CASE, METHOD FOR PREPARING CARBON FIBER WATCH CASE, AND SMARTWATCH", which is incorporated herein by reference in its entirety.

### TECHNICAL FIELD

This application relates to the field of wearable device technologies, and in particular, to a carbon fiber watch case, a method for preparing a carbon fiber watch case, and a smartwatch.

### BACKGROUND

With the rapid development and popularization of wearable devices such as smartwatches, consumers are increasingly dependent on smartwatches. A current smartwatch not only has a basic time display function, but also can implement health monitoring and network communication.

A current watch case is usually made of a plastic or metal material. Plastic is lightweight but has low strength, while metal has high strength but is relatively heavy, which cannot satisfy wearing requirements of consumers. Under the premise of satisfying basic functions of the smartwatch, how to obtain both high strength and lightweight for wearing is an urgent problem to be resolved for a current smartwatch case.

### SUMMARY

This application provides a carbon fiber watch case, a method for preparing a carbon fiber watch case, and a smartwatch, to satisfy consumption requirements of consumers for smartwatches.

According to a first aspect, this application provides a carbon fiber watch case. The carbon fiber watch case may be used in an electronic device such as a smartwatch that can transmit an electromagnetic signal. The carbon fiber watch case includes a main body structure and a conductive structure, and the conductive structure and the main body structure can be closely integrated. The main body structure specifically includes a braided body and a polymer body. The braided body is formed by using a three-dimensional braiding process by braiding a raw fiber including a carbon fiber, so that the braided body is of a network-like structure. The polymer body at least fills a gap of the network-like structure of the braided body so that the braided body and the conductive structure form an integrated structure. Gaps of the network-like structure of the braided body are connected to each other. Therefore, the polymer body is of a continuous structure, so that the polymer body and the braided body can form a continuously interlocking structure. The main body structure has an inner surface and an outer surface. When the conductive structure is combined with the main body structure, the conductive structure has a first contact located on the inner surface of the main body structure and a second contact located on the outer surface of the main body structure. The conductive structure is electrically conductive, and may implement electromagnetic conduction between the inner surface and the outer surface of the main body structure by using the first contact and the second contact. To be specific, an electromagnetic signal connection between an electrical device located on the side of the inner surface of the main body structure and an electrical device located on the side of the outer surface of the main body structure may be implemented by using the conductive structure.

In the foregoing carbon fiber watch case, the braided body and the polymer body are continuously interlocked so that the main body structure has an integrated structure. This improves mechanical strength and sealing performance of the carbon fiber watch case, and ensures relatively high reliability. The conductive structure may implement a conduction function between the inner surface and the outer surface of the main body structure. When the carbon fiber watch case is used in an electronic device such as a smartwatch, electromagnetic shielding of the carbon fiber is prevented from affecting electromagnetic signal transmission of the electronic device such as the smartwatch.

The conductive structure and the main body structure may be combined in a plurality of implementations.

In a possible manner, the conductive structure is columnar and is embedded in the main body structure. The conductive structure penetrates the main body structure, one end of the conductive structure is exposed from the inner surface of the main body structure to form the first contact, and the other end of the conductive structure is exposed from the outer surface of the main body structure to form the second contact. The conductive structure may be any one or a combination of at least two of conductive metal, a conductive adhesive, and conductive ceramic.

In another possible manner, the conductive structure is in a form of a thin film and is formed on a surface of the main body structure. The conductive structure extends to the inner surface of the main body structure to form the first contact, and extends to the outer surface of the main body structure to form the second contact. The conductive structure may be any one or a combination of at least two of a metal plating layer, a conductive ink layer, and a conductive deposition layer.

In this application, the braided body may be a three-dimensional braided body, and the three-dimensional braided body has a more stereoscopic structure. This helps form a continuously interlocking structure between the braided body and the polymer body.

Possibly, in addition to the carbon fiber, the raw fiber forming the braided body further includes a colored fiber having rich colors, and the colored fiber may provide a plurality of colors for the carbon fiber watch case. The colored fiber and the carbon fiber are braided by using a braiding process to form the braided body. The colored fiber herein may be any one or a combination of at least two of a quartz fiber, a glass fiber, a basalt fiber, an aramid fiber, a metal fiber, and a ceramic fiber.

To ensure sufficient strength of the braided body, a volume proportion of the carbon fiber in the braided body is not less than 40%. For a good three-dimensional braiding appearance, a volume proportion of the braided body in the main body structure is 30% to 60%. In addition, a braiding angle of the braided body is limited to 20° to 40°.

The polymer body may be specifically any one or a combination of two of a thermosetting polymer body and a thermoplastic polymer body.

According to a second aspect, this application further provides a method for preparing a carbon fiber watch case, which may be used to prepare the foregoing carbon fiber watch case. The preparation method includes:
braiding, by using a braiding process, a raw fiber to form a braided body, where the braided body has a network-like structure, and the braided body includes a carbon fiber;
disposing a conductive structure; and
injecting a polymer body into the braided body so that the polymer body and the braided body form a main body structure.

The polymer body at least fills space of the network-like structure of the braided body so that the braided body and the conductive structure form an integrated structure. The main body structure has an inner surface and an outer surface. The conductive structure has a first contact located on the inner surface and a second contact located on the outer surface. Based on different manners for combining the conductive structure and the main body structure, an implementation sequence of a step of disposing a conductive structure and a step of injecting a polymer body into the braided body so that the polymer body and the braided body form a main body structure may be interchanged.

When the step of disposing a conductive structure is before the step of injecting a polymer body into the braided body so that the polymer body and the braided body form a main body structure, the conductive structure may be columnar and be embedded in the main body structure. The disposing a conductive structure is specifically implemented as:
embedding the conductive structure in a gap of the braided body; or
reserving a through hole that penetrates the braided body when the braided body is formed.

The disposing a conductive structure is specifically implemented as: casting a conductive material in the through hole to form the conductive structure.

When the step of disposing a conductive structure is after the step of injecting a polymer body into the braided body so that the polymer body and the braided body form a main body structure, the conductive structure may be in a form of a thin film and be formed on a surface of the main body structure. The disposing a conductive structure is specifically implemented as: forming the conductive structure on the surface of the main body structure.

A preparation process of forming the conductive structure on the surface of the main body structure includes any one or a combination of at least two of water plating, spraying, and physical vapor deposition.

According to a third aspect, this application further provides a smartwatch. The smartwatch includes a main body and the carbon fiber watch case. Installation space is formed in the carbon fiber watch case, and the main body may be disposed in the installation space. The main body includes a circuit board and an antenna element disposed on the circuit board, and the antenna element is connected to a first contact of a conductive structure by using a spring plate. The conductive structure is equivalent to a feedpoint of the antenna element, and the antenna element may transmit an electromagnetic signal to an external device by using the conductive structure.

### BRIEF DESCRIPTION OF DRAWINGS

FIG. 1 is a schematic diagram of a structure of a carbon fiber watch case in a conventional technology;
FIG. 2a is a schematic diagram of a structure of a watch case of a smartwatch according to an embodiment of this application;
FIG. 2b is a schematic diagram of a structure of a carbon fiber watch case according to an embodiment of this application;
FIG. 2c is a schematic diagram of a cross-sectional structure of a carbon fiber watch case according to an embodiment of this application;
FIG. 3a is a schematic diagram of a structure of a carbon fiber watch case according to an embodiment of this application;
FIG. 3b is a schematic diagram of a cross-sectional structure of a carbon fiber watch case according to an embodiment of this application;
FIG. 4a is a schematic diagram of a cross-sectional structure of a main body structure in a carbon fiber watch case according to an embodiment of this application;
FIG. 4b is a schematic diagram of a structure of a braided body in a carbon fiber watch case according to an embodiment of this application;
FIG. 5a is a schematic diagram of a cross-sectional structure of a main body structure in a carbon fiber watch case according to an embodiment of this application;
FIG. 5b is a schematic diagram of a structure of a braided body in a carbon fiber watch case according to an embodiment of this application;
FIG. 6a is a schematic diagram of a cross-sectional structure of a main body structure in a carbon fiber watch case according to an embodiment of this application;
FIG. 6b is a schematic diagram of a structure of a braided body in a carbon fiber watch case according to an embodiment of this application;
FIG. 7a and FIG. 7b are schematic flowcharts of a method for preparing a carbon fiber watch case according to an embodiment of this application;
FIG. 8 is a schematic flowchart of a method for preparing a carbon fiber watch case according to an embodiment of this application;
FIG. 9 is a schematic flowchart of a method for preparing a carbon fiber watch case according to an embodiment of this application;
FIG. 10 is a schematic diagram of a structure of embedding a conductive structure in a braided body in a method for preparing a carbon fiber watch case according to an embodiment of this application;
FIG. 11 is a schematic diagram of a structure of a carbon fiber watch case obtained in a method for preparing a carbon fiber watch case according to an embodiment of this application;
FIG. 12 is a schematic diagram of a structure of reserving a through hole in a braided body in a method for preparing a carbon fiber watch case according to an embodiment of this application;
FIG. 13 is a schematic flowchart of a method for preparing a carbon fiber watch case according to an embodiment of this application;
FIG. 14 is a schematic diagram of a cross-sectional structure of casting a conductive structure in a through hole in a method for preparing a carbon fiber watch case according to an embodiment of this application;
FIG. 15 is a schematic diagram of a structure of a carbon fiber watch case obtained in a method for preparing a carbon fiber watch case according to an embodiment of this application;
FIG. 16a to FIG. 16c are schematic preparation flowcharts of forming a shape of a carbon fiber watch case in a method for preparing a carbon fiber watch case according to an embodiment of this application;
FIG. 17a is a schematic diagram of a structure of a smartwatch according to an embodiment of this application;
FIG. 17b is an exploded view of a smartwatch according to an embodiment of this application;
FIG. 18 is a top view of a smartwatch according to an embodiment of this application;
FIG. 19 is a schematic diagram of a cross-sectional structure of M-M in FIG. 18;
FIG. 20 is an enlarged diagram of a part N in FIG. 19; and
FIG. 21 is a schematic diagram of a structure of a smartwatch according to an embodiment of this application.

### DESCRIPTION OF EMBODIMENTS

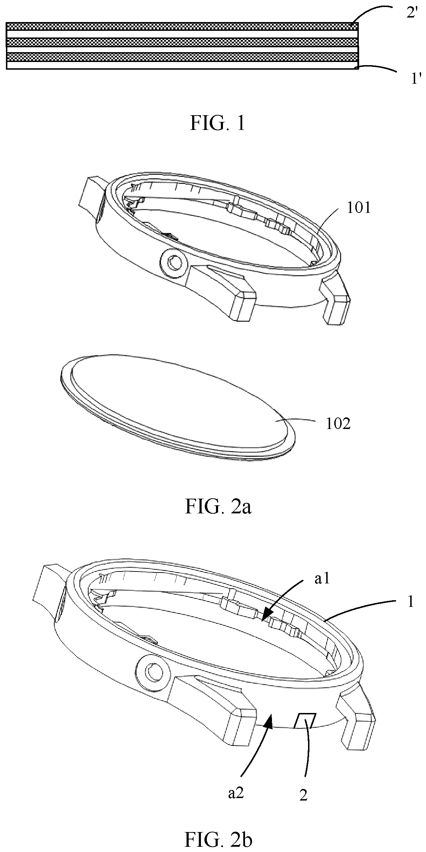

In an existing smartwatch, a case is usually made of a plastic or metal material. With the improvement of living standards, requirements of consumers for textures of products are gradually increasing. A plastic watch case has low strength and a cheap texture. Therefore, the plastic watch case is gradually abandoned by the consumers. Although a metal smartwatch case has high strength, a heavy texture of the smartwatch case causes poor comfort in wearing, and is usually criticized by the consumers. In this context, a carbon fiber has attracted attention due to excellent physical properties and special texture surfaces, and may be considered for use in smartwatch case manufacturing. At present, a prepared carbon fiber structure is generally a two-layer or multi-layer plate structure. As shown in FIG. 1, along a thickness direction, the carbon fiber structure is formed by alternating a plurality of carbon fiber layers 1' and a plurality of resin layers 2'. An innermost layer of the carbon fiber structure is the carbon fiber layer 1', and an outermost layer of the carbon fiber structure is the resin layer 2'. Any carbon fiber layer 1' and resin layer 2' adj acent to each other are pressed together. Because a carbon fiber composite material has poor toughness and relatively low interlayer strength, it is difficult for the carbon fiber structure to form a complex structure (which needs to be used together with an inner container or a support), and problems such as a floating fiber, delamination, cracking, and poor sealing performance easily occur. Naturally, this cannot satisfy requirements of consumers for smartwatch cases. In addition, an electromagnetic shielding characteristic of the carbon fiber is not conducive to implementation of a communication function of the smartwatch. Therefore, the current carbon fiber structure limits application and development of the carbon fiber in smartwatch case preparation.

On this basis, an embodiment of this application provides a carbon fiber watch case, which has relatively high strength and reliability, does not affect implementation of a communication function of a smartwatch, and can satisfy requirements of consumers for smartwatch cases.

Terms used in the following embodiments are merely intended to describe specific embodiments, but are not intended to limit this application. The terms "one", "a", "the", "the foregoing", "this", and "the one" of singular forms used in this specification and the appended claims of this application are also intended to include expressions such as "one or more", unless otherwise specified in the context clearly.

Reference to "an embodiment", "some embodiments", or the like described in this specification indicates that one or more embodiments of this application include a specific feature, structure, or characteristic described with reference to the embodiments. Therefore, statements such as "in an embodiment", "in some embodiments", "in some other embodiments", and "in other embodiments" that appear at different places in this specification do not necessarily refer to a same embodiment. Instead, the statements mean "one or more but not all of embodiments", unless otherwise specifically emphasized in another manner. The terms "include", "contain", "have", and their variants all mean "include but are not limited to", unless otherwise specifically emphasized in another manner.

An embodiment of this application provides a carbon fiber watch case. The carbon fiber watch case may be used in a smartwatch. It should be understood that, as shown in FIG. 2a, the carbon fiber watch case may be specifically a middle frame 101 or a bottom case 102. The middle frame 101 and the bottom case 102 are made of a same material. In addition, the middle frame 101 and the bottom case 102 may be detachable, as shown in FIG. 2a, or may be integrated. As shown in FIG. 2b, an example in which the carbon fiber watch case is specifically the middle frame 101 is used. The carbon fiber watch case includes a main body structure 1 and a conductive structure 2, and the main body structure 1 includes a carbon fiber. The carbon fiber may enable the main body structure 1 to have a relatively light weight, thereby improving wearing comfort. The main body structure 1 has an inner surface a1 and an outer surface a2, and the conductive structure 2 may connect the inner surface a1 and the outer surface a2 of the main body structure 1, to prevent an electromagnetic shielding function of the carbon fiber from affecting a communication function of the smartwatch. The conductive structure 2 may be used as a feedpoint of an antenna to implement receiving and transmitting of an electromagnetic signal of the smartwatch.

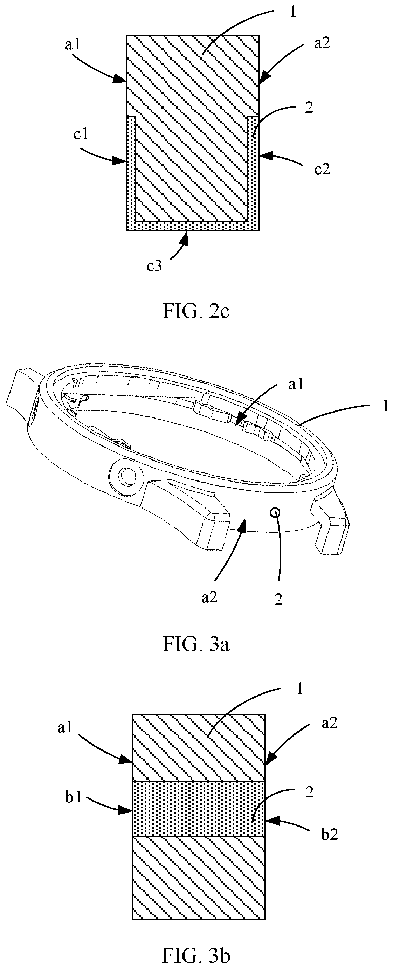

As shown in FIG. 2b, the conductive structure 2 is in a form of a film layer. With reference to FIG. 2c, the conductive structure 2 is equivalent to being formed on a surface of the main body structure 1. The conductive structure 2 includes a first extension portion c1, a second extension portion c2, and a connection portion c3 connected between the first extension portion c1 and the second extension portion c2. The connection portion c3 is equivalent to a side surface attached between the inner surface a1 and the outer surface a2 of the main body structure 1. With reference to the structure shown in FIG. 2b, the main body structure 1 is a continuous ring. An inner wall of the ring is the inner surface a1 of the main body structure 1, and an outer wall of the ring is the outer surface a2 of the main body structure 1. It may be considered that the conductive structure 2 extends from the inner surface a1 of the main body structure 1 to the outer surface a2 of the main body structure 1 through the main body structure 1. The first extension portion c1 extends to the inner surface a1 of the main body structure 1, and the second extension portion c2 extends to the outer surface a2 of the main body structure 1. When the carbon fiber watch case needs to implement electromagnetic signal transmission between the inner surface a1 and the outer surface a2 of the main body structure 1, the first extension portion c1 of the conductive structure 2 may serve as a first contact, and the second extension portion c2 of the conductive structure 2 may serve as a second contact. Generally, with reference to FIG. 2b, a circuit board and an antenna part of the smartwatch are disposed on the side of the inner surface a1 of the main body structure 1. The antenna may be connected to the first extension portion c1 of the conductive structure 2. A signal of the antenna may be transmitted to the second extension portion c2 by using the first extension portion c1 and the connection portion c3, to transmit an electromagnetic signal, so that the electromagnetic signal is received by an external device. An external signal may be transmitted to the first extension portion c1 by using the second extension portion c2 and the connection portion c3, so that the antenna receives an electromagnetic signal. In other words, with the existence of the conductive structure 2, an electromagnetic signal on the side of the inner surface a1 of the main body structure 1 and an electromagnetic signal on the side of the outer surface a2 of the main body structure 1 may be transmitted by using the conductive structure 2. In this structure, the conductive structure 2 may be specifically any one or a combination of at least two of a metal plating layer, a conductive ink layer, and a conductive deposition layer. For example, when the conductive structure 2 is the metal plating layer, the metal plating layer may be specifically a single-metal structure (for example, a copper layer or a gold layer) or a multi-layer metal structure (inner layer of chromium + outer layer of nickel, inner layer of copper + outer layer of nickel, or inner layer of chromium + middle layer of nickel + outer layer of gold). When the conductive structure 2 is the conductive ink layer, a dispersed medium in the conductive ink may include conductive particles such as metal powder, carbon tubes, and graphene.

To further improve structural integration of the conductive structure 2 and the main body structure 1 and combine the conductive structure 2 and the main body structure 1 more closely, the conductive structure 2 may be embedded in the main body structure 1. As shown in FIG. 3a, a conductive structure 2 is columnar. With reference to FIG. 3b, the conductive structure 2 is combined with a main body structure 1 by penetrating an inner surface a1 and an outer surface a2 of the main body structure 1. One end b1 of the conductive structure 2 is exposed from the inner surface a1 of the main body structure 1, and the other end b2 of the conductive structure 2 is exposed from the outer surface a2 of the main body structure 1. When a carbon fiber watch case needs to implement electromagnetic signal transmission between the inner surface a1 and the outer surface a2 of the main body structure 1, the end b1 of the conductive structure 2 may serve as a first contact, and the end b2 of the conductive structure 2 may serve as a second contact, so that an electromagnetic signal on the side of the inner surface a1 of the main body structure 1 and an electromagnetic signal on the side of the outer surface a2 of the main body structure 1 may be transmitted by using the conductive structure 2. In this structure, the conductive structure 2 may be specifically any one or a combination of at least two of conductive metal, a conductive adhesive, and conductive ceramic.

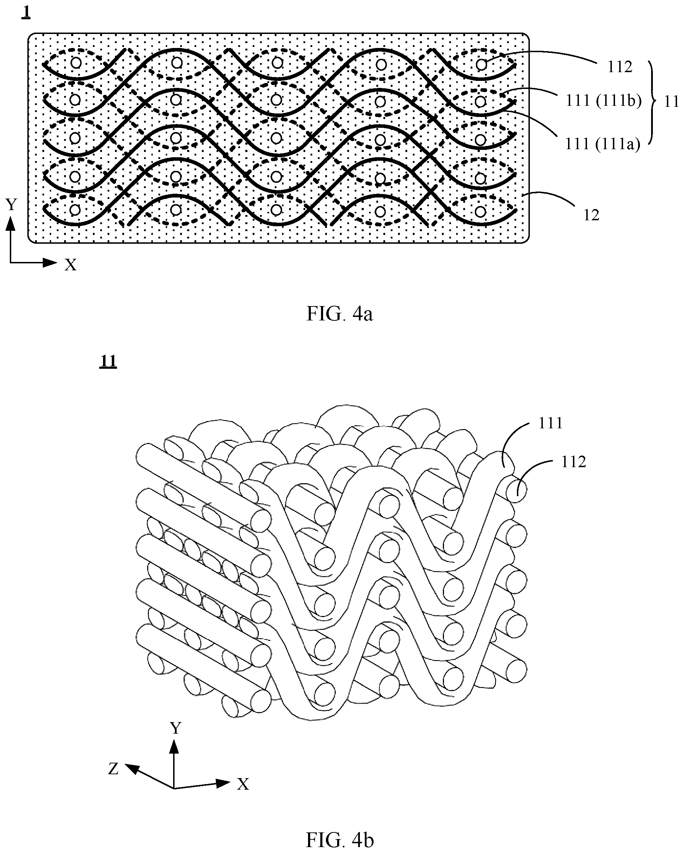

As shown in FIG. 4a, the main body structure 1 specifically includes a braided body 11 and a polymer body 12. The braided body 11 is formed by using a braiding process by braiding a raw fiber, and has a network-like three-dimensional structure. It may be considered that, in space occupied by the braided body 11, different raw fibers extend, are interwoven, and are intertwined together based on a wiring manner of the braiding process, to form a three-dimensional structure with a plurality of gaps. A carbon fiber has advantages of high strength and light weight. In a carbon fiber watch case, a fiber used to form the braided body 11 include the carbon fiber, and the carbon fiber may provide relatively high structural strength and relatively light mass for the braided body 11. The carbon fiber is braided to form a network-like three-dimensional structure, so that strength of the main body structure 1 can be further improved, and mass of the main body structure 1 can be further reduced. The polymer body 12 may be specifically a thermosetting polymer material (for example, epoxy resin or acrylic resin, which may be used independently or in combination), or may be a thermoplastic polymer material (for example, polycarbonate or polyamide, which may be used independently or in combination), or may be a combination of a thermosetting polymer material and a thermoplastic polymer material (for example, a combination of epoxy resin and polycarbonate, a combination of acrylic resin and polycarbonate and polyamide, where a quantity and a type of materials in the combination are not limited).

As shown in FIG. 4a, gaps that are connected to each other are formed in the network-like three-dimensional structure of the braided body 11, and the polymer body 12 fills these gaps. The polymer body 12 may form a network-like structure that matches the braided body 11. The polymer body 12 fills these gaps, and the polymer body 12 can wrap the braided body 11. The network-like structure of the braided body 11 and the network-like structure of the polymer body 12 are continuously interlocked in terms of a structure, so that the main body structure 1 has relatively high strength, and reliability of the structure is improved.

In a process of molding the main body structure 1, the conductive structure 2 may be combined with the main body structure 1, so that the conductive structure 2, the braided body 11, and the polymer body 12 have an integrated structure. The conductive structure 2 can overcome electromagnetic shielding of the carbon fiber, so that the carbon fiber watch case has a conduction function. In other words, in preparation of the carbon fiber watch case provided in this embodiment of this application, the main body structure 1 and the conductive structure 2 may be prepared by using an integrated molding process, so that the conductive structure 2 and the main body structure 1 are combined, and there is an integrated structure between the main body structure 1 and the conductive structure 2. This ensures structural stability of the conductive structure 2.

A fiber including the carbon fiber may be specifically braided to form the braided body 11 by using a weaving or braiding process, which specifically includes but is not limited to a 2.5D weaving process, a 3D weaving process, and a 3D braiding process. With the use of different braiding processes, braided bodies may be obtained, including but not limited to an angle-interlocked braided body, a three-directional orthogonal braided body, and an in-plane quasi-isotropic braided body. The braided body 11 has a braided texture. In a braiding process, a magnitude of a braiding angle for the braiding may be adjusted to change an appearance texture of the braided body 11, so as to change an appearance of the main body structure 1. In this way, an appearance of the carbon fiber watch case may be adjusted and changed, so that the appearance of the carbon fiber watch case can satisfy a preference requirement of the consumers. The braiding angle may be in a range of 20° to 40°. The braiding angle herein means an angle between any two fibers in the braided body 11 that intersect. It should be understood that, when different braiding processes and braiding parameters are selected, the braided body 11 presents different appearance textures. The following describes in detail the main body structure 1 in this embodiment of this application by using a specific structure of a braided body.

FIG. 4a shows a main body structure 1, where a braided body 11 of the main body structure 1 is a 2.5D woven fabric, and is specifically an angle-interlocked braided body. With reference to FIG. 4b, based on a braiding manner, the braided body 11 includes a first fiber body 111 and a second fiber body 112. At least one of the first fiber body 111 and the second fiber body 112 is a carbon fiber, and the other fiber may include a colored fiber that can present colors. The colored fiber may provide a colorful appearance for the main body structure 1. The first fiber body 111 extends in a serpentine shape in a plane, and the second fiber body 112 extends along a straight-line direction, where the straight-line direction is perpendicular to the plane on which the first fiber body 111 is located. For two adjacent first fiber bodies 111, refer to a first fiber body 111a (shown by a solid line) and a first fiber body 111b (shown by a dashed line) in the figure. In a direction perpendicular to the plane on which the first fiber body 111 is located, the second fiber body 112 is inserted into a gap formed by braiding the first fiber body 111a and the first fiber body 111b in a staggered manner. A coordinate system having a first direction X, a second direction Y, and a third direction Z is established as a reference. The second fiber body 112 extends along the third direction Z. The first fiber body 111 is parallel to a plane formed by the first direction X and the second direction Y. The first fiber body 111a and the first fiber body 111b that are adjacent extend in a serpentine shape and are braided in a staggered manner along the first direction X. The second fiber body 112 is inserted into the gap formed by braiding the first fiber body 111. Finally, the 2.5D woven fabric with the angle-interlocked braided body is obtained.

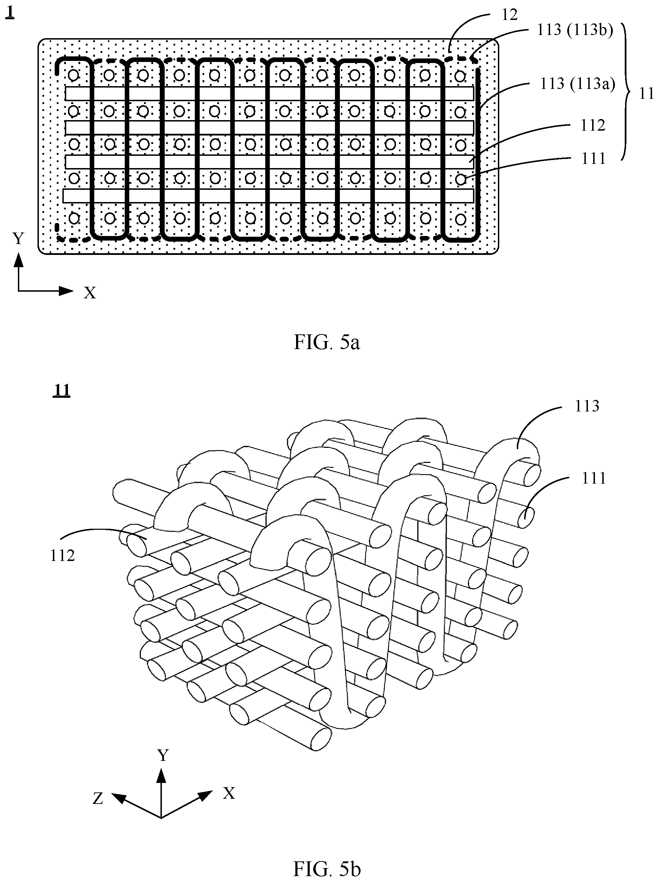

A 3D braided body is a three-dimensional braided body. A fiber may be in a three-dimensional four-directional, three-dimensional five-directional, three-dimensional six-directional, or three-dimensional seven-directional form, or the like. A braided body 11 in a main body structure 1 shown in FIG. 5a is a 3D woven fabric, and is specifically a three-directional orthogonal braided body. With reference to FIG. 5b, the braided body 11 includes a first fiber body 111, a second fiber body 112, and a third fiber body 113. At least one of the first fiber body 111, the second fiber body 112, and the third fiber body 113 is a carbon fiber. Refer to FIG. 4a and FIG. 4b together. The first fiber body 111 extends along a straight-line direction, the second fiber body 112 extends along another straight-line direction, extension directions of the first fiber body 111 and the second fiber body 112 are perpendicular to each other, and the first fiber body 111 and the second fiber body 112 are in an orthogonal braided form. The third fiber body 113 extends in a serpentine shape in a plane, the plane is perpendicular to the first fiber body 111 and is parallel to the second fiber body 112, and planes on which a plurality of third fiber bodies 113 are located are parallel to each other. For two adjacent third fiber bodies 113, refer to a third fiber body 113a (shown by a solid line) and a third fiber body 113b (shown by a dashed line) in the figure. In a direction perpendicular to the plane on which the third fiber body 113 is located, the third fiber body 113a and the third fiber body 113b are inserted into a gap formed by orthogonally braiding the first fiber body 111 and the second fiber body 112 in a staggered manner. A coordinate system having a first direction X, a second direction Y, and a third direction Z is established as a reference. The first fiber body 111 extends along the first direction X. The second fiber body 112 extends along the third direction Z. The first fiber body 111 and the second fiber body 112 are orthogonally braided. The third fiber body 113 is parallel to a plane formed by the first direction X and the second direction Y, and inserted, in a serpentine shape, into the gap formed by orthogonally braiding the first fiber body 111 and the second fiber body 112. Finally, the 3D woven fabric with a three-directional orthogonal structure is obtained.

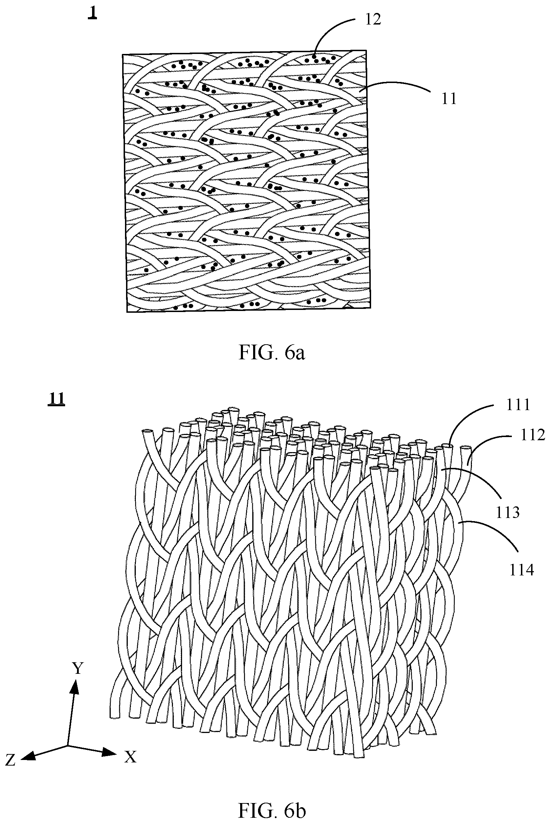

FIG. 6a shows another main body structure 1, and a braided body 11 of the main body structure 1 is a three-dimensional four-directional braided body 11. With reference to FIG. 6b, the braided body 11 includes a first fiber body 111, a second fiber body 112, a third fiber body 113, and a fourth fiber body 114. At least one of the first fiber body 111, the second fiber body 112, the third fiber body 113, and the fourth fiber body 114 is a carbon fiber. The first fiber body 111 extends along a second direction Y, and the second fiber body 112, the third fiber body 113, and the fourth fiber body 114 shuttle and are interwoven around the first fiber body 111. Finally, the three-dimensional four-directional braided body is obtained.

It should be understood that, in FIG. 4b, FIG. 5b, and FIG. 6b, the structure of the braided body 11 is merely an example to explain that the braided body 11 has a network-like structure. The polymer body 12 may fill a gap of the network-like structure. Gaps of the braided body 11 are connected to each other. Therefore, a structure of the polymer body 12 filling the gap is continuous. A continuously interlocking structure can be formed between the continuous polymer body 12 and the braided body 11, so as to implement an integrated structure of the polymer body 12 and the braided body 11.

With reference to FIG. 4a, FIG. 5a, and FIG. 6a, the braided body 11 and the polymer body 12 have different appearances. The braided body 11 has a braided texture surface, and the polymer body 12 has a plastic feel. In the carbon fiber watch case, volume proportions of the braided body 11 and the polymer body 12 have specific impact on an overall appearance of the carbon fiber watch case. A volume proportion of the braided body 11 in the main body structure 1 is not limited in this embodiment of this application, and the main body structure 1 may be adjusted as required. For example, to reflect that the carbon fiber watch case has a specific high-class texture, the volume proportion of the braided body 11 in the main body structure 1 may be adjusted to 30% to 60%. Specifically, the volume proportion of the braided body 11 in the main body structure 1 may be 30%, 35%, 40%, 50%, or 60%. It should be understood that a higher proportion of the braided body 11 in the main body structure 1 indicates a stronger texture of the main body structure 1. When the volume proportion of the braided body 11 in the main body structure 1 is 40% or higher, the carbon fiber watch case basically does not have a plastic feel, but has a relatively obvious texture.

With reference to FIG. 4b, FIG. 5b, and FIG. 6b, the braided body 11 may be braided by using different fibers. On the basis that the carbon fiber is included, the raw fiber used to form the braided body 11 may further include a colored fiber having a colorful appearance. The colored fiber and the carbon fiber may be braided, by using a braiding process, together to form the braided body 11. The colored fiber may be specifically a glass fiber, a metal fiber, a ceramic fiber, an aramid fiber, a basalt fiber, or the like. The addition of the colored fiber can change a color of the carbon fiber watch case. With reference to FIG. 4b, FIG. 5b, and FIG. 6b, it can be learned that the braided bodies 11 of different structures have different texture structures, so that the carbon fiber watch case can present rich textures and colors.

In conclusion, in the carbon fiber watch case provided in this embodiment of this application, the braided body 11 including the carbon fiber and the polymer body 12 form a continuously interlocking structure, so that it can be ensured that the carbon fiber watch case has relatively high strength, high sealing performance, and high reliability. Except for the continuously interlocking structure of the braided body 11 and the polymer body 12, the carbon fiber watch case has no other inner container or support for support, and can achieve lightweight. By adjusting the proportion of the carbon fiber to the colored fiber in the braided body 11 and a preparation manner, the appearance of the carbon fiber watch case can be improved, and personalized requirements of the consumers can be satisfied. With the addition of the conductive structure 2, the carbon fiber watch case can overcome an electromagnetic shielding characteristic of the carbon fiber, and satisfy a communication requirement of the smartwatch.

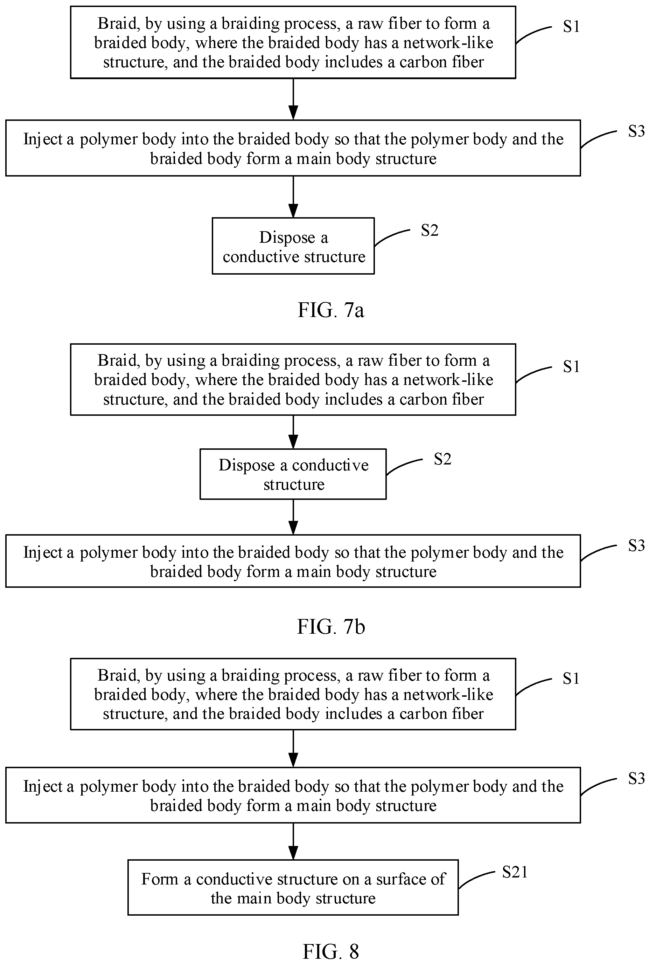

An embodiment of this application further provides a method for preparing a carbon fiber watch case, which may be used to prepare the foregoing carbon fiber watch case. Based on the structure of the carbon fiber watch case, as shown in FIG. 7a and FIG. 7b, the preparation method may include the following steps.
S1: Braid, by using a braiding process, a raw fiber to form a braided body, where the braided body has a network-like structure, and the braided body includes a carbon fiber.
S2: Dispose a conductive structure.
S3: Inject a polymer body into the braided body so that the polymer body and the braided body form a main body structure.

A sequence of step S2 and step S3 is not limited.

With reference to FIG. 4a, FIG. 5a, and FIG. 6a, the polymer body 12 at least fills space of a network-like structure of the braided body 11, so that the braided body 11 and the conductive structure 2 form an integrated structure. The main body structure 1 has an inner surface a1 and an outer surface a2, and the conductive structure 2 has a first contact located on the inner surface a1 and a second contact located on the outer surface a2. The conductive structure 2 may be disposed on the main body structure 1 in a manner of being formed on a surface of the main body structure 1 (refer to FIG. 2b and FIG. 2c), or the conductive structure 2 may be disposed on the main body structure 1 in a manner of penetrating the inner surface a1 and the outer surface a2 of the main body structure 1 (refer to FIG. 3a and FIG. 3b), provided that the integrated structure of the conductive structure 2 and the braided body 11 can be implemented. From a perspective of appearance, the braided body 11, the conductive structure 2, and the polymer body 12 are of an integrated structure. The braided body 11, the conductive structure 2, and the polymer body 12 cannot be divided and stripped without damaging the carbon fiber watch case.

Specifically, the raw fiber may include a fiber like a carbon fiber and a glass fiber for improving structural strength, and may further include a colored fiber. The colored fiber may be any one or a combination of at least two of a quartz fiber, a glass fiber, a basalt fiber, an aramid fiber, a metal fiber, and a ceramic fiber.

Refer to FIG. 4a, FIG. 5a, and FIG. 6a. The braiding process may be specifically a weaving or braiding process, and specifically includes but is not limited to a 2.5D weaving process, a 3D weaving process, and a 3D braiding process. With the use of different braiding processes, braided bodies may be obtained, including but not limited to an angle-interlocked braided body, a three-directional orthogonal braided body, and an in-plane quasi-isotropic braided body. In the three-dimensional braided body, a fiber may be in a three-dimensional four-directional, three-dimensional five-directional, three-dimensional six-directional, or three-dimensional seven-directional form, or the like. The braided body 11 has a braided texture. In a braiding process, a magnitude of a braiding angle for the braiding may be adjusted to change an appearance texture of the braided body 11, so as to change an appearance of the main body structure 1. In this way, an appearance of the carbon fiber watch case may be adjusted and changed, so that the appearance of the carbon fiber watch case can satisfy a preference requirement of the consumers. The braiding angle during braiding may be in a range of 20° to 40°.

When the polymer body is injected into the braided body to form the main body structure, the braided body 11 is first placed in a closed mold, and a liquid polymer body 12 is injected into the mold by performing resin transfer molding. The liquid polymer body 12 is injected into a gap of the network-like structure of the braided body 11, and the gap of the network-like structure of the braided body 11 is fully filled. The liquid polymer body 12 can wrap the raw fiber of the braided body 11, and the polymer body 12 is in close contact with the raw fiber of the braided body 11. Then, the liquid polymer body 12 is cured and molded based on a curing process of the polymer body 12, so that the polymer body 12 and the braided body 11 can form a continuously interlocking structure, namely, the main body structure 1. The polymer body 12 may be a thermosetting polymer material (for example, epoxy resin or acrylic resin, which may be used independently or in combination), or may be a thermoplastic polymer material (for example, polycarbonate or polyamide, which may be used independently or in combination), or may be a combination of a thermosetting polymer material and a thermoplastic polymer material (for example, a combination of epoxy resin and polycarbonate, or a combination of acrylic resin, polycarbonate, and polyamide, where a quantity and types of materials in the combination are not limited).

In the preparation method shown in FIG. 7a, the conductive structure 2 is implemented after the main body structure 1 is formed. With reference to FIG. 8, step S2 may be specifically implemented in the following manner:
S21: Form the conductive structure on a surface of the main body structure.

With reference to FIG. 3a, the conductive structure 2 is layered (which may also be considered as a thin film). Specifically, a material having a conduction function may be formed on the surface of the main body structure 1 by performing water plating, spraying, physical vapor deposition, or the like, so that the conductive structure 2 is closely combined with the surface of the main body structure 1, to form an integrated structure. An example in which the conductive structure 2 is a metal plating layer is used. The metal plating layer may be a single-metal structure (for example, a copper layer or a gold layer), or may be a multi-layer metal structure (for example, inner layer of chromium + outer layer of nickel, inner layer of copper + outer layer of nickel, or inner layer of chromium + middle layer of nickel + outer layer of gold). An example in which the conductive structure 2 is a conductive ink film layer is used. A dispersion medium in the conductive ink includes conductive materials such as metal powder, carbon tubes, and graphene. Before the conductive structure 2 is formed, the surface of the main body structure 1 may be processed first, so that when the conductive structure 2 is formed on the surface of the main body structure 1, the conductive structure 2 is better combined with the surface of the main body structure 1, thereby reducing a possibility that the conductive structure 2 is stripped from the surface of the main body structure 1. In such a preparation manner, the conductive structure 2 may be closely combined with the surface of the main body structure 1, and compatibility between the polymer body 12 and the conductive structure 2 is considered, so that material selection ranges of the polymer body 12 and the conductive structure 2 are wider, which is conducive to technical promotion.

It should be noted that the conductive structure 2 needs to extend to the inner surface a1 and the outer surface a2 of the main body structure 1, to electrically connect the inner surface a1 and the outer surface a2 of the conductive structure 2.

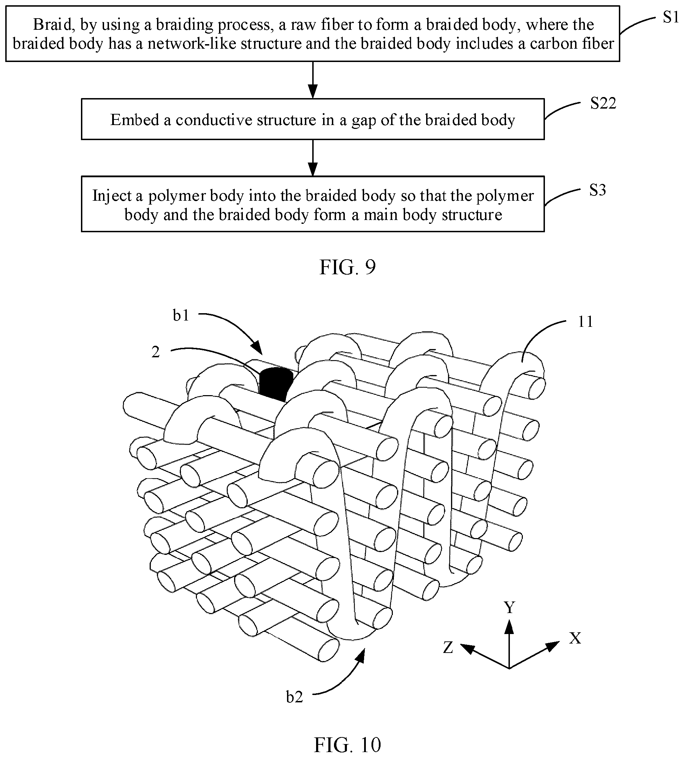

In the preparation method shown in FIG. 7a, the conductive structure 2 is implemented before the main body structure 1 is formed. With reference to FIG. 9, step S2 may be specifically implemented in the following manner:
S22: Embed the conductive structure in a gap of the braided body.

The structures in FIG. 3a and FIG. 3b are used as examples. The braided body 11 has a network-like structure, and the network-like structure has a gap. The braided body 11 shown in FIG. 4b is used as an example. As shown in FIG. 10, it is set that the braided body 11 has a first surface b1 and a second surface b2, and the first surface b1 and the second surface b2 are opposite to each other along a second direction Y. The conductive structure 2 is embedded in the gap of the braided body 11. One end of the conductive structure 2 is exposed from the first surface b1, and the other end is exposed from the second surface b2 (not shown in FIG. 10 due to a perspective limitation). The conductive structure 2 herein may be specifically a polymer material, a metal material, conductive ceramic, or the like. The conductive structure 2 of different materials may be selected based on different conductivity requirements.

After step S22 is completed, step S3 is implemented. The polymer body is injected into the braided body to form the main body structure, and the conductive structure 2 penetrates the inner surface and the outer surface of the main body structure.

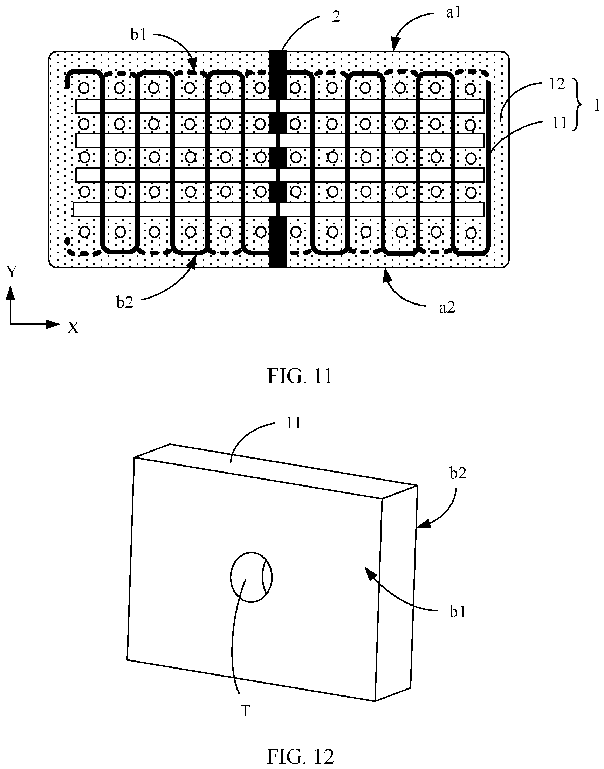

For example, a structure shown in FIG. 10 is placed in the closed mold, and the liquid polymer body 12 is injected into the mold by performing resin transfer molding. The liquid polymer body 12 is injected into the gap of the network-like structure of the braided body 11, and the gap of the network-like structure of the braided body 11 is fully filled. The liquid polymer body 12 also partially wraps the conductive structure 2. Then, the liquid polymer body 12 is cured and molded based on a curing process of the polymer body 12, so that the polymer body 12 and the braided body 11 can form a continuously interlocking structure, namely, the main body structure 1. In addition, the polymer body 12 is closely combined with the conductive structure 2. One end of the conductive structure 2 is exposed from the inner surface a1 of the main body structure 1, and the other end of the conductive structure 2 is exposed from the outer surface a2 of the main body structure 1, to obtain a structure shown in FIG. 11. With reference to FIG. 10 and FIG. 11, the inner surface a1 of the main body structure 1 corresponds to the first surface b1 of the braided body 11, and the outer surface a2 of the main body structure 1 corresponds to the second surface b2 of the braided body 11. The polymer body 12 is any one or a combination of two of a thermosetting polymer body and a thermoplastic polymer body.

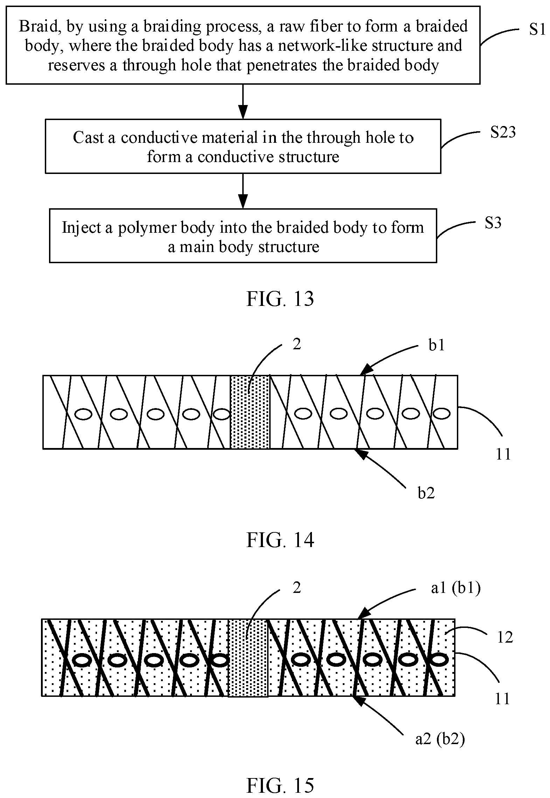

In another embodiment, the conductive structure 2 is also implemented before the main body structure 1 is formed. In the braided body 11 formed in step S1, a through hole that penetrates the braided body 11 is reserved in the braided body 11. As shown in FIG. 12, the braided body 11 has a through hole T. The through hole T is formed when braiding is performed (a braiding structure of the braided body 11 is not shown herein). It is set that the braided body 11 has a first surface b1 and a second surface b2, and the through hole T penetrates the first surface b1 and the second surface b2 of the braided body 11. With reference to FIG. 13, step S2 may be specifically implemented in the following manner:
S23: Cast a conductive material in the through hole to form the conductive structure.

With reference to FIG. 12, a liquid conductive material (for example, a conductive adhesive or a liquid conductive ceramic) is injected into the through hole T with the assistance of a template, and then a solid conductive structure 2 is obtained by performing curing and imaging. For a structure of the conductive structure 2, refer to FIG. 14. The first surface b1 and the second surface b2 are opposite to each other along the second direction Y. One end of the conductive structure 2 is exposed from the first surface b1, and the other end is exposed from the second surface b2. The conductive structure 2 herein may be specifically conductive structures 2 of different materials selected based on different conductivity requirements.

After step S22 is completed, step S3 is implemented. A structure shown in FIG. 14 is placed in the closed mold, and the liquid polymer body 12 is injected into the mold by performing resin transfer molding. The liquid polymer body 12 is injected into the gap of the network-like structure of the braided body 11, and the gap of the network-like structure of the braided body 11 is fully filled. The liquid polymer body 12 also partially wraps the conductive structure 2. Then, the liquid polymer body 12 is cured and molded based on a curing process of the polymer body 12, so that the polymer body 12 and the braided body 11 can form a continuously interlocking structure, namely, the main body structure 1. In addition, the polymer body 12 is closely combined with the conductive structure 2. One end of the conductive structure 2 is exposed from the inner surface a1 of the main body structure 1, and the other end of the conductive structure 2 is exposed from the outer surface a2 of the main body structure 1. For a structure of the conductive structure 2, refer to FIG. 15. With reference to FIG. 14 and FIG. 15, the inner surface a1 of the main body structure 1 and the first surface b1 of the braided body 11 are coplanar, and the outer surface a2 of the main body structure and the second surface b2 of the braided body 11 are coplanar. The polymer body 12 is any one or a combination of two of a thermosetting polymer body and a thermoplastic polymer body.

In the preparation process shown in FIG. 13, a carbon fiber watch case is prepared by reserving a hole and performing casting and packaging, and the conductive structure 2 is prepared by using materials such as a conductive adhesive or conductive ceramic. These materials have good compatibility with the polymer body 12. When resin transfer molding is performed, a material selection range of the polymer body 12 is wider, which is conducive to promotion and use of the technical solution.

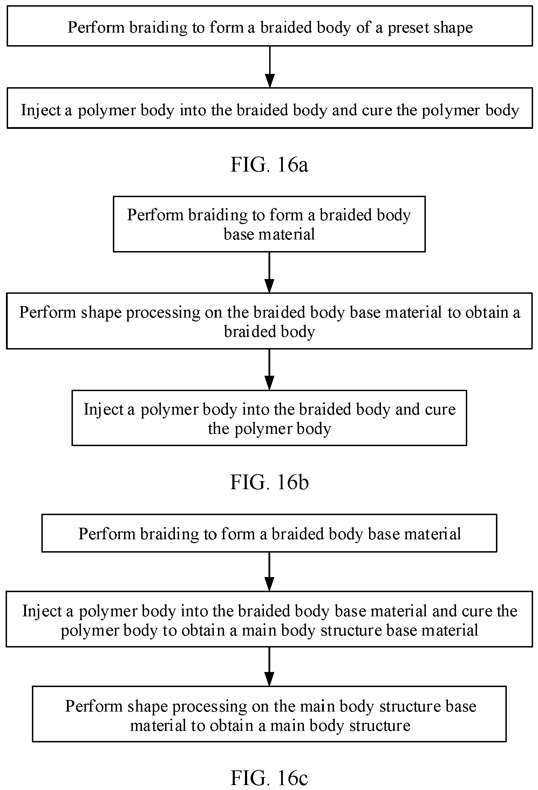

The carbon fiber watch case in this embodiment of this application may be the middle frame 101 in FIG. 2a, or may be the bottom case 102 in FIG. 2a. Structures of the middle frame 101 and the bottom case 102 are completely different. In carbon fiber watch case preparation, as shown in FIG. 16a, in a process of preparing the braided body 11, the raw fiber may be directly braided to form a braided body 11 of a preset shape, where the preset shape adapts to the carbon fiber watch case to be prepared. Then, the polymer body 12 is injected into the braided body 11 and is cured, to form the main body structure 1. When the liquid polymer body 12 is injected, the closed mold is also preset to adapt to the shape of the braided body 11. After the liquid polymer body 12 is injected, the liquid polymer body 12 may fill a network gap of the braided body 11, and the main body structure 1 is prepared after the polymer body 12 is cured. Alternatively, as shown in FIG. 16b, a braided body base material may be formed by performing braiding, and the braided body base material is only a simple structure such as a cube or a plate. Then, shape processing is performed on the braided body base material by using a shape processing manner such as bending, stamping, and cutting, to obtain the braided body 11, and an obtained braided body 11 has a preset carbon fiber watch case shape. Then, the liquid polymer body 12 is injected into the braided body 11 and is cured to obtain the main body structure 1. Certainly, the closed mold herein is preset to adapt to the shape of the braided body 11. Alternatively, as shown in FIG. 16c, a braided body base material may be formed by performing braiding, and the braided body base material is only a simple structure such as a cube or a plate. After the polymer body 12 is injected into the braided body base material and is cured, a main body structure base material is formed. Then, based on the shape of the carbon fiber watch case, the main body structure base material is processed by using a manner such as stamping and cutting, to obtain the main body structure 1. In a process of injecting the polymer body 12, the closed mold does not need to adapt to the preset carbon fiber watch case, provided that the polymer body 12 can be injected into the gap of the braided body 11. It should be noted that, regardless of which manner is used, in the finally obtained carbon fiber watch case, the conductive structure 2 needs to have the first contact on the inner surface a1 and the second contact on the outer surface a2 of the main body structure 1.

With reference to the foregoing embodiment, filling the polymer body 12 in the gap of the network-like structure of the braided body 11 may be implemented by performing resin transfer molding. The solid polymer body 12 and the braided body 11 are continuously interlocked in terms of a structure. Both the braided body 11 and the polymer body 12 are of a three-dimensional network-like structure. The structural interlocking of the braided body 11 and the polymer body 12 can avoid reliability problems such as breaking, peeling, delamination, and poor sealing performance of the carbon fiber watch case. In addition, with the use of the foregoing molding process, an internal structure such as a support or a fixed column does not need to be introduced, thereby implementing lightweight of the carbon fiber watch case.

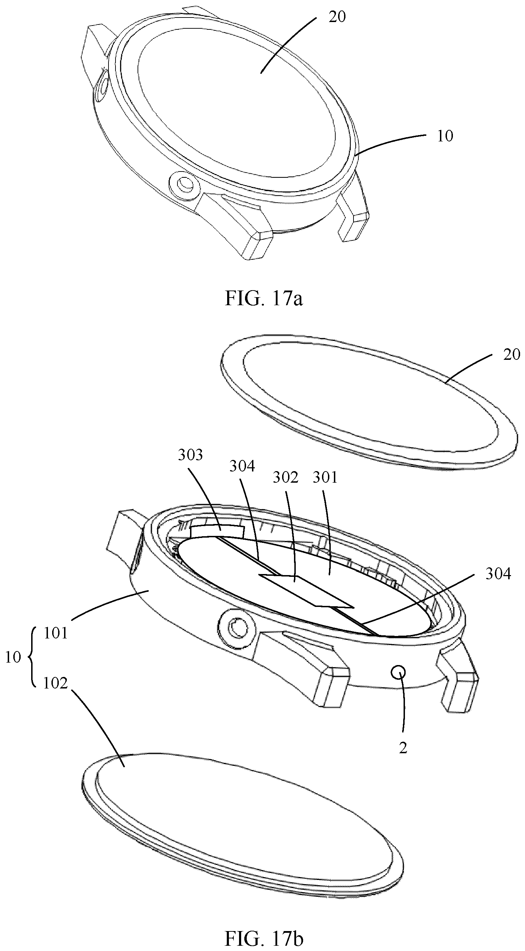

The carbon fiber watch case provided in this embodiment of this application may be used in a smartwatch. As shown in FIG. 17a and FIG. 17b, the smartwatch includes a carbon fiber watch case 10, a screen assembly 20, and a watch body (not shown herein). The watch body is disposed in space between the carbon fiber watch case 10 and the screen assembly 20. The carbon fiber watch case 10 may include a bottom case 102 and a middle frame 101. The middle frame 101 is annular, and has a top opening and a bottom opening that are opposite to each other. The screen assembly 20 is fastened to the top opening of the middle frame 101, and the bottom case 102 is fastened to the bottom opening of the middle frame 101, to form accommodation space between the screen assembly 20 and the bottom case 102. The accommodation space may be configured to place the watch body. The carbon fiber watch case 10 has advantages of light mass, high strength, and good sealing performance, and has a fashionable appearance and is beautiful.

As shown in FIG. 17b, the watch body is specifically a functional body of the smartwatch, and has functions such as time display and information processing. To implement electromagnetic signal transmission, the watch body has a circuit board 301 and an antenna assembly 302 disposed on the circuit board 301. Spring plates 303 attached to an inner side (which may be considered as an inner surface a1 of a main body structure 1) of the middle frame 101 are further disposed on the watch body, and the antenna assembly 302 is connected to the spring plates 303 by using wires 304. The antenna assembly 302 herein is located in the carbon fiber watch case 10. Because the middle frame 101 and the bottom case 102 are carbon fiber watch cases and have an electromagnetic signal shielding function, the antenna assembly 302 cannot transmit an electromagnetic signal to a device outside the carbon fiber watch case 10. A conductive structure 2 on the middle frame 101 may be in contact with the spring plates 303, so that a signal of the antenna assembly 302 may be guided. The conductive structure 2 may be considered as a feedpoint of the antenna assembly 302. It should be understood that, in specific design and manufacturing of an electronic device, a location and a quantity of the conductive structures 2 may be adjusted as required. This is not limited herein.

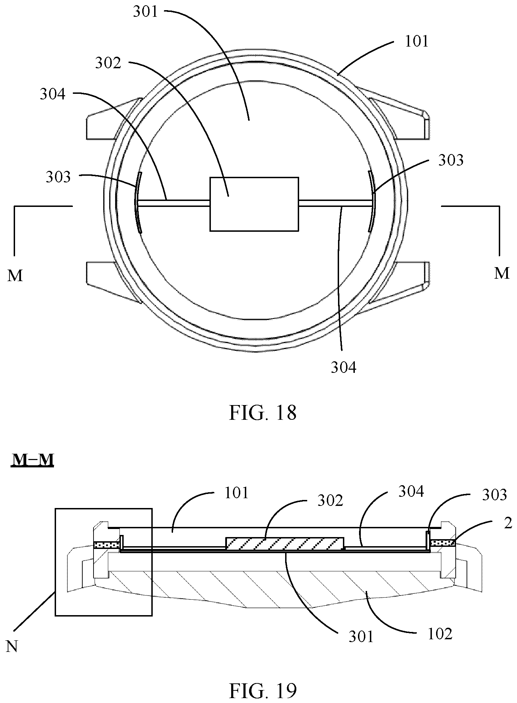

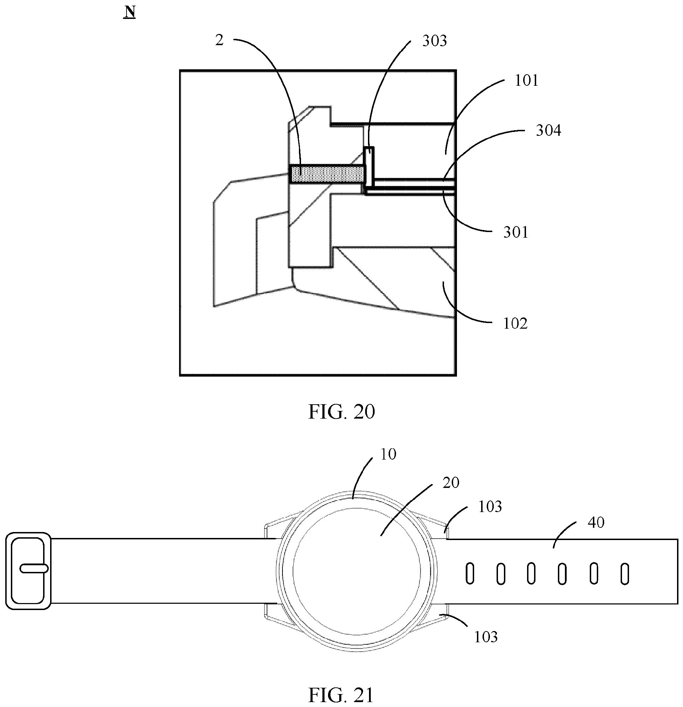

Further, refer to a top view of the smartwatch (the screen assembly 20 is hidden) shown in FIG. 18. Two spring plates 303 are symmetrically disposed on the inner side of the middle frame 101. Spring plates 303 are connected to the antenna assembly 302 on the circuit board 301 by using the wires 304. The smartwatch is sectioned by using a plane shown along M-M, to obtain a schematic diagram of a cross-sectional structure of the smartwatch shown in FIG. 19. With reference to an enlarged diagram of a part N in FIG. 19 shown in FIG. 20, it can be seen that the antenna assembly 302 is mounted on the circuit board 301, the spring plates 303 are attached to the inner side (equivalent to the inner surface a1 of the main body structure 1) of the middle frame 101, and the conductive structure 2 penetrates the inner side and an outer side of the middle frame 101. One end (namely, a first contact) of the conductive structure 2 located on the inner side of the middle frame 101 is in contact with the spring plates 303, and the other end (namely, a second contact) of the conductive structure 2 is exposed from the outer side of the middle frame 101. The conductive structure 2 is equivalent to a feedpoint of the antenna assembly 302. The antenna assembly 302 may receive an externally transmitted electromagnetic signal by using the conductive structure 2, or may transmit an electromagnetic signal of the antenna assembly 302 by using the conductive structure 2, so as to facilitate external reception.

For ease of wearing, the smartwatch may be further equipped with a watchband. As shown in FIG. 21, there are two groups of connection portions on a carbon fiber watch case 10 of the smartwatch, and each group of connection portions has two end links 103 which are symmetrically disposed. One group of corresponding end links 103 is correspondingly connected to one watchband 40. The watchband 40 herein may also be braided by using a carbon fiber, to satisfy wearing and bending requirements.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A carbon fiber watch case, comprising: a main body structure and a conductive structure, wherein the main body structure has an inner surface and an outer surface, and the conductive structure has a first contact located on the inner surface and a second contact located on the outer surface to electrically connect the inner surface and the outer surface of the carbon fiber watch case; and
the main body structure comprises a braided body and a polymer body; the braided body comprises a carbon fiber, and the braided body has a network-like structure; and the polymer body at least fills a gap of the network-like structure of the braided body, so that the braided body and the conductive structure form an integrated structure.

2. The carbon fiber watch case according to claim 1, wherein the conductive structure is embedded in the main body structure, one end of the conductive structure is exposed from the inner surface of the main body structure to form the first contact, and the other end of the conductive structure is exposed from the outer surface of the main body structure to form the second contact.

3. The carbon fiber watch case according to claim 2, wherein the conductive structure is any one or a combination of at least two of conductive metal, a conductive adhesive, and conductive ceramic.

4. The carbon fiber watch case according to claim 1, wherein the conductive structure is formed on a surface of the main body structure, and the conductive structure extends to the inner surface of the main body structure to form the first contact, and extends to the outer surface of the main body structure to form the second contact.

5. The carbon fiber watch case according to claim 4, wherein the conductive structure is any one or a combination of at least two of a metal plating layer, a conductive ink layer, and a conductive deposition layer.

6. The carbon fiber watch case according to any one of claims 1 to 5, wherein the braided body is a three-dimensional braided body, and the three-dimensional braided body is formed by using a three-dimensional braiding process.

7. The carbon fiber watch case according to any one of claims 1 to 6, wherein the braided body further comprises a colored fiber.

8. The carbon fiber watch case according to claim 7, wherein the colored fiber is any one or a combination of at least two of a quartz fiber, a glass fiber, a basalt fiber, an aramid fiber, a metal fiber, and a ceramic fiber.

9. The carbon fiber watch case according to any one of claims 1 to 8, wherein a volume proportion of the braided body in the main body structure is 30% to 60%.

10. The carbon fiber watch case according to any one of claims 1 to 9, wherein a braiding angle of the braided body is 20° to 40°.

11. The carbon fiber watch case according to any one of claims 1 to 10, wherein the polymer body is any one or a combination of two of a thermosetting polymer body and a thermoplastic polymer body.

12. A method for preparing a carbon fiber watch case, comprising:
braiding, by using a braiding process, a raw fiber to form a braided body, wherein the braided body has a network-like structure, and the braided body comprises a carbon fiber;
disposing a conductive structure; and
injecting a polymer body into the braided body so that the polymer body and the braided body form a main body structure, wherein
the polymer body at least fills space of the network-like structure of the braided body so that the braided body and the conductive structure form an integrated structure; the main body structure has an inner surface and an outer surface; and the conductive structure has a first contact located on the inner surface and a second contact located on the outer surface.

13. The preparation method according to claim 12, wherein the disposing a conductive structure comprises:
embedding the conductive structure in a gap of the braided body.

14. The preparation method according to claim 12, wherein a through hole that penetrates the braided body is reserved in the braided body; and
the disposing a conductive structure comprises:
casting a conductive material in the through hole to form the conductive structure.

15. The preparation method according to claim 12, wherein the disposing a conductive structure comprises:
forming the conductive structure on a surface of the main body structure.

16. The preparation method according to claim 15, wherein a preparation process of forming the conductive structure on the surface of the main body structure comprises any one or a combination of at least two of water plating, spraying, and physical vapor deposition.

17. A smartwatch, comprising: a watch body and the carbon fiber watch case according to any one of claims 1 to 11, wherein
installation space is formed in the carbon fiber watch case; the watch body is disposed in the installation space; the watch body comprises a circuit board and an antenna element disposed on the circuit board; and the antenna element is connected to a first contact of the conductive structure by using a spring plate.
